# EUROPÄISCHE PATENTSCHRIFT

(11) **EP 1 099 489 B1**
(45) Veröffentlichungstag und Bekanntmachung des Hinweises auf die Patenterteilung: **25.02.2004**
(21) Anmeldenummer: 00124151.2
(22) Anmeldetag: 07.11.2000
(51) Int. Cl.: B09C 1/00, E02D 19/12

(54) **Bauwerk zur Boden- und Grundwassersanierung und Verfahren zur Errichtung eines solchen**
Construction for soil and ground water decontamination and method of construction thereof
Ouvrage de décontamination du sol et de l'eau phréatique et procédé de construction d'un tel ouvrage

(30) Priorität: 11.11.1999 DE 19954241; 08.02.2000 DE 10005517
(43) Veröffentlichungstag der Anmeldung: 16.05.2001
(73) Patentinhaber: bfm GmbH Umwelt-Beratung, -Forschung, -Management, 86167 Augsburg (DE)
(72) Erfinder: Koch, Michael, Dr., 82256 Fürstenfeldbruck (DE); Weindl, Jörg, 80999 München (DE)
(74) Vertreter: Popp, Eugen, Dr.

(56) Entgegenhaltungen:
- EP-A- 0 844 031
- DE-A- 19 608 818
- DE-A- 19 622 159
- DE-A- 19 846 804
- US-A- 3 347 049

## Beschreibung

Die Erfindung betrifft ein Bauwerk zur Boden- und Grundwassersanierung nach dem Oberbegriff des Anspruchs 1 bzw. des Anspruchs 3 sowie Verfahren zur Errichtung eines solchen.

Zur Sanierung von Grundwasser- und Bodenkontaminationen sind seit den 80er Jahren viele verschiedenartige Verfahren bekannt, von denen in letzter Zeit die in-situ-Sanierungsverfahren verstärkte Beachtung erlangt haben. Diese sind unter den Gesichtspunkten der ökonomischen Effizienz und sozialen Verträglichkeit sowie auch der ökologischen Wirksamkeit differenziert zu bewerten. Unter dem Gesichtspunkt geringer Betriebskosten bei hoher Sanierungswirkung wurde speziell das Konzept der Reinigung kontaminierter Grundwasserströme mittels einer quer zur Strömungsrichtung in den Grundwasserabstrom eingebauten Schadstoffbarriere in Form einer Reaktions- oder einer Sorptionswand weiterentwickelt. Dieser Technologie werden hervorragende Zukunftsaussichten beigemessen.

Bisher sind vor allem zwei Konstruktionsprinzipien zur Anwendung gekommen - zum einen die permeable Wand, deren gesamte Länge als Reaktivzone ausgebildet ist und zum anderen das sog. "Funnel-and-Gate"-System, das aus einer Kombination von permeablen Durchlaßbauwerken besteht. Das letztgenannte System kann vor allem dort kostengünstig angewandt werden, wo in der vollen Länge durchströmte Reinigungswände zur Aufnahme von Sicker- oder Grundwasser eines gesamten Kontaminationsbereiches zu aufwendig werden. Wesentliche Vorteile dieses Systems liegen in einem verminderten Verbrauch an Reaktorfüllung, in deren leichter Austauschbarkeit und in der Möglichkeit der Hintereinanderschaltung mehrerer, auch unterschiedlicher, Reaktoren zur gleichzeitigen Entfernung verschiedener Schadstoffe.

In der US 5,487,622 wird der grundsätzliche Aufbau solcher Funnel-and-Gate-Systeme in verschiedenen Ausführungen beschrieben.

In der US 5,490,743 wird ein spezielles System dieser Art beschrieben, das im wesentlichen aus in den Boden eingebrachten, wandungslosen Gate-Abschnitten aus Filtermaterial mit einigem Abstand voneinander und zwischen diesen in den Boden eingetriebenen metallischen Dichtwand(Funnel)-Abschnitten besteht. Zur Erzeugung der zylindrischen bzw. prismatischen Filtermaterialbereiche werden entsprechend geformte Hohlkörper in den Boden eingetrieben und im Inneren dieser Hohlkörper wird die Erde entfernt und durch das Filtermaterial ersetzt. Nach Abschluß dieser Ersetzung werden die Hohlkörper wieder herausgezogen.

In der DE 197 24 418 A1 wird ein Reaktor zur Grundwassersanierung beschrieben, der im wesentlichen aus einem mit einer Reaktorfüllung versehenen Geotextilsack sowie einer Mehrzahl von Führungsrohren und Filterrohren besteht.

In der EP 0 844 031 A1 ist ein System zur Behandlung von verunreinigtem Grundwasser gezeigt, das von einer Verunreinigungsstelle kommt, die von der Umgebung durch eine in der Erde ausgebildete Dichtwand isoliert ist. Kontaminiertes Wasser, das sich in dem von der Umgebung isolierten Bereich ansammelt, wird mittels eines Drainagegrabens in wenigstens eine in der Erde vorgesehene Behandlungszellen geleitet und dort behandelt. Danach wird es in einem Bereich außerhalb des isolierten, mit kontaminiertem Grundwasser versehenen Gebietes geleitet. Neben einem hohen konstruktiven Aufwand zur Isolierung des Gebiets mit kontaminiertem Wasser, entstehen auch für das Anbringen der Einrichtungen zum Sammeln des kontaminierten Wassers erhebliche Kosten.

In der US 3 347 049 ist eine Vorrichtung dargestellt, die einen frisch ausgehobenen Graben an seinen beiden Seitenwänden abstützt, um so beispielsweise das Nachrutschen von Erde von den Seitenbereichen her in den Graben zu verhindern. Das Abstützen der Seitenwände mit dieser Vorrichtung, die für den Rohrleitungsbau gedacht ist, geschieht lediglich temporär und auch aufgrund der Konstruktion der Vorrichtung räumlich eingeschränkt durch zwei Seitenwände, die mittels in der Vorrichtung integrierter Hydraulikzylinder an die Grabenwände gepreßt werden. Dieses Verfahren ist jedoch lediglich für ein kurzfristiges Stützen von Grabenabschnitten und auch nur für Gräben, die eine gewisse räumliche Ausdehnung nicht überschreiten, wie dies z.B. im Rohrleitungsbau der Fall ist, geeignet.

In der DE 196 22 159 A1 wird eine Vorrichtung zur Boden- und Grundwassersanierung gemäß dem Oberbegriff des Anspruchs 1 bzw. des Anspruchs 3 und ein Verfahren zum Erstellen und Betreiben einer solchen Vorrichtung angegeben. Hier umfaßt das Durchlaßbauwerk (Gate) einen Boden und Seitenwände, die eine zur Durchleitung des Grundwassers durch das Bauwerk geeignete Form bzw. Struktur haben. In einer Ausführungsform sind die Seitenwände wasserdicht, weisen aber kleine Einlauf- und Auslaufbereiche auf, die so angeordnet sind, daß das Bauwerk vom Grundwasser im wesentlichen vertikal (und zwar in einem ersten Abschnitt von oben nach unten und in einem zweiten Abschnitt von unten nach oben) durchströmt wird. In der Druckschrift wird vorgeschlagen, das Bauwerk als Betonbauwerk und insbesondere in Form eines Stahlbetonbauwerks vor Ort oder in Fertigteilbauweise zu erstellen.

Der Erfindung liegt die Aufgabe zugrunde, ein verbessertes Bauwerk der gattungsgemäßen Art, welches insbesondere mit verringertem Aufwand und niedrigen Kosten erstellt werden kann, sowie ein einfaches und kostengünstiges Verfahren zur Errichtung eines solchen Bauwerks anzugeben.

Diese Aufgabe wird hinsichtlich ihres Vorrichtungsaspektes durch ein Bauwerk mit den Merkmalen des Anspruchs 1 bzw. 3 und hinsichtlich ihres Verfahrensaspektes durch ein Verfahren mit den Merkmalen des Anspruchs 20 gelöst.

Vorteilhafte Weiterbildungen der Erfindung sind Gegenstand der betreffenden abhängigen Ansprüche.

Die Erfindung schließt den grundlegenden Gedanken ein, ein Bauwerk zur Bodenund Grundwassersanierung unter Einbeziehung mindestens einer Spundwand als eine dauerhafte Begrenzungswand des Bauwerks zu erstellen. Sie schließt weiter den Gedanken ein, diese Spundwand beim fertiggestellten Bauwerk mit ihrer Unterkante (bzw. der Oberkante einer im unteren Bereich vorgesehenen Einströmöffnung) im wesentlichen oberhalb des oberen Grundwasserstauers zu plazieren, und sie schließt in diesem Zusammenhang insbesondere den weiterführenden Gedanken ein, diese endgültige Position der Spundwand durch Anheben aus einer ursprünglichen tieferen Position zu gewinnen.

In dieser ursprünglichen Position steht die Spundwand mit ihrer Unterkante bzw. der Oberkante ihrer Einströmöffnung unterhalb oder höchstens in Höhe der Oberkante des unteren Grundwasserstauers und schirmt die stromabwärts gelegene Baugrube zur Erstellung des Bauwerks gegenüber dem Grundwasserstrom ab. Im angehobenen End-Zustand hingegen erlaubt sie den Durchtritt des Grundwasserstromes in das dann im Inneren des Bauwerks angeordnete Filtermaterialbett.

In einer bevorzugten Ausführung umfaßt das Bauwerk heben der ersten, oberhalb des oberen Grundwasserhorizonts angeordneten Wand und der zweiten, im wesentlichen über die gesamte Mächtigkeit des Grundwasserstromes reichenden Wand noch eine grundsätzlich analog zur ersten Wand aufgebaute und angeordnete dritte Wand, die ebenfalls bevorzugt als Spundwand ausgeführt ist. In dieser Ausführung erstreckt das Filtermaterialbett sich zwischen der ersten und dritten Wand.

Bei dieser Ausführung kommt der wesentliche technische und wirtschaftliche Vorteil der vorgeschlagenen Lösung voll zum Tragen: Da der Verbau der Baugrube später direkt als Gate-Bauwerk dient, kann mit dem Ergebnis einer Minimierung der Baukosten auf gesonderte Baugrubenverbauten verzichtet werden.

In einer zusätzlich kostensparenden Ausführung ist die das Gate nach unten begrenzende wasserundurchlässige Schicht eine grundwasserstauende Bodenschicht, oder eine solche bildet jedenfalls ein bewußt genutztes Begrenzungselement des Bauwerks. In einer weiter bevorzugten Ausführung weist die wasserundurchlässige Schicht eine Betonsohle auf.

Auf die wasserundurchlässige Schicht ist zweckmäßigerweise zunächst eine Filterkies- oder Schotterschüttung aufgebracht und auf dieser liegt eine Adsorber- oder Reaktorschicht (z. B. Aktivkohleschüttung). Die gesamte Filtermaterialschicht erstreckt sich in der Höhe bevorzugt im wesentlichen über die gesamte Höhe der zweiten Wand, mit der diese über die den Boden bildende wasserundurchlässige Schicht herausragt. Anstelle einer adsorptiv wirkenden Filterschicht (oder mit einer solchen kombiniert), kann auch eine reaktiv wirkende Füllung zur Wasserbehandlung vorgesehen sein.

Mit der vorgeschlagenen Anordnung wird der Grundwasserstrom zunächst durch die zwischen der wasserundurchlässigen Schicht und der Unterkante der ersten Wand geschaffene Einlaßöffnung in das Filtermaterialbett - und durch eine geeignete Höhenlage der Unterkante der ersten Wand insbesondere in dessen Filterkies- bzw. Schotterteil - gezwungen. Anschließend strömt das Grundwasser durch die Filterkiesschicht und danach durch die Adsorber- oder Reaktorschicht über die einen Überlauf bildende Oberkante der zweiten Wand. Bei der bevorzugten Ausführung, mit einer in vergleichbarer Höhe wie die erste Wand angeordneten dritten Wand, wird der Grundwasserstrom danach erneut durch eine Adsorber- oder Reaktorschicht und dann eine Filterkiesschicht geleitet und verläßt das Durchlaßbauwerk durch die zwischen der Unterkante der dritten Wand und der wasserundurchlässigen Bodenschicht verbleibende Abströmöffnung. Der Grundwasserstrom wird im Bauwerk also gewissermaßen (einmal oder mehrfach) diagonal durch das Filterbett geführt.

Der als Spundwand ausgeführten ersten und dritten Wand sind Versteifungselemente zugeordnet, denen gegenüber Segmente (Spundbohlen) der jeweiligen Spundwand vertikal verschieblich sind.

Die seitlichen Begrenzungen des Bauwerkes sind bevorzugt ebenfalls durch bis mindestens auf das Niveau des unteren Grundwasserhorizonts niedergebrachte Spundwände gebildet, die in der bevorzugten Ausführung zusammen mit der ersten und dritten Wand einen Spundkasten bilden. In diesem wird unter entsprechender Wasserhaltung der Boden ausgehoben, und diese Wände bilden die Umfassungswände des Bauwerks.

Senkrecht zur ersten und dritten Wand und somit im wesentlichen parallel zum Grundwasserstrom sowie zu den das Bauwerk begrenzenden Seitenwänden verlaufen zweckmäßigerweise zusätzliche Seitenwände, die das Bauwerk in Bauwerkssektionen unterteilen. Diese Unterteilung in Sektionen ermöglicht einen sektionsweisen Austauschs des Filtermaterials, etwa der Aktivkohle, so daß bereits beanspruchte und mit Schadstoffen beladene Abschnitte gesondert ausgetauscht werden können. Weiterhin ermöglicht die Unterteilung in Sektionen den abschnittsweisen Einsatz unterschiedlicher Filtermaterialien bzw. Materialkörnungen und/oder -höhen zur Ermittlung entsprechend optimierter Parameter. Speziell kann in einzelnen Sektionen auch der Einfluß einer ungesättigten Zone bzw. eines Kapillarsaumes auf die Aktivkohle untersucht werden. Durch Variation der Schüttungshöhen in einzelnen Sektionen bzw. auch unterschiedliche Trennwandhöhen kann die Durchlässigkeit und Reinigungswirkung des Bauwerks im Hinblick auf die tatsächlich auftreffenden Kontaminationen optimiert werden.

Das Bauwerk wird zweckmäßigerweise mit einer im wesentlichen horizontal verlaufenden Decke, insbesondere Betondecke, geschlossen. Eine geeignete Wahl der Abmessungen sowie ein in der Decke vorgesehener Revisionsschacht ermöglichen ein vollständiges Begehen und Überbauen des Bauwerks und somit eine optimale Überwachung und Wartung. Zudem ermöglicht die Ausführung als geschlossenes Bauwerk die leichte Installation von Überwachungssystemen (etwa Gaswarnsystemen) und Bewetterungseinrichtungen. Die Begehbarkeit des Filterbettes wird in einfacher und zweckmäßiger Weise durch einen oberhalb seiner Oberfläche angeordneten Gitterroststeg gewährleistet.

In einer weiter bevorzugten Ausführung ist stromaufwärts der zweiten Wand (Trennwand) ein Schwerphasensumpf mit Verrohrung zum Abziehen von mit dem Grundwasser mitgeführten Schwerphasen angeordnet. Auf diese Weise wird eine hohe Sanierungswirkung nicht nur in Bezug auf polyzyklische aromatische Kohlenwasserstoffe (PAK), sondern auch in Bezug auf eventuell begleitende oder andere Schwerphasen gesichert, wie sie beispielsweise bei einem kontaminierten Gaswerksgelände zu erwarten sind.

Hinweise auf wesentliche vorteilhafte Verfahrensschritte ergeben sich bereits aus der obigen Erläuterung von bevorzugten Konstruktionsmerkmalen des Bauwerks.

Besonders hinzuweisen ist darauf, daß die zweite Wand (die in der bevorzugten Bauausführung als Trennwand wirkt) zum einen als Spundwand in die wasserstauende Bodenschicht eingetrieben und zum anderen - alternativ - ggf. in Verbindung mit der Herstellung einer Betonsohle auch aus Beton errichtet werden kann.

Die Errichtung des Bauwerks beginnt in vorteilhafter Weise mit dem Voraushub einer Trasse zur Freimachung von Fundamenten und sonstigen störenden Bodeneinschlüssen. Nach dem Niederbringen der Spundwand bzw. Spundwände kann der Boden im Bereich des Bauwerks bis zum unteren Grundwasserhorizont ausgehoben werden. Die Spundwände werden nach den statischen Erfordernissen mit Versteifungselementen versehen, und zwar zunächst im oberen Bereich und später auch im unteren Bereich. Hierbei können die optional vorgesehenen Trennwände zwischen einzelnen Sektionen zugleich als Auflager der unteren Aussteifung dienen. Anschließend können die erste und (falls eine solche vorgesehen ist) dritte Wand segment- bzw. bohlenweise bis auf die vorgesehene Einbauhöhe nach oben gezogen und hiermit die Einströmöffnung und wahlweise eine Auströmöffnung geschaffen werden. Vor der Herstellung der Bauwerksdecke werden die angehobene Wand bzw. angehobenen Wände zweckmäßigerweise bis auf die erforderliche Einbindetiefe in die Betondecke abgeschnitten.

Vorteile und Zweckmäßigkeiten der Erfindung ergeben sich im übrigen aus der nachfolgenden Beschreibung bevorzugter Ausführungsbeispiele anhand der Figuren.

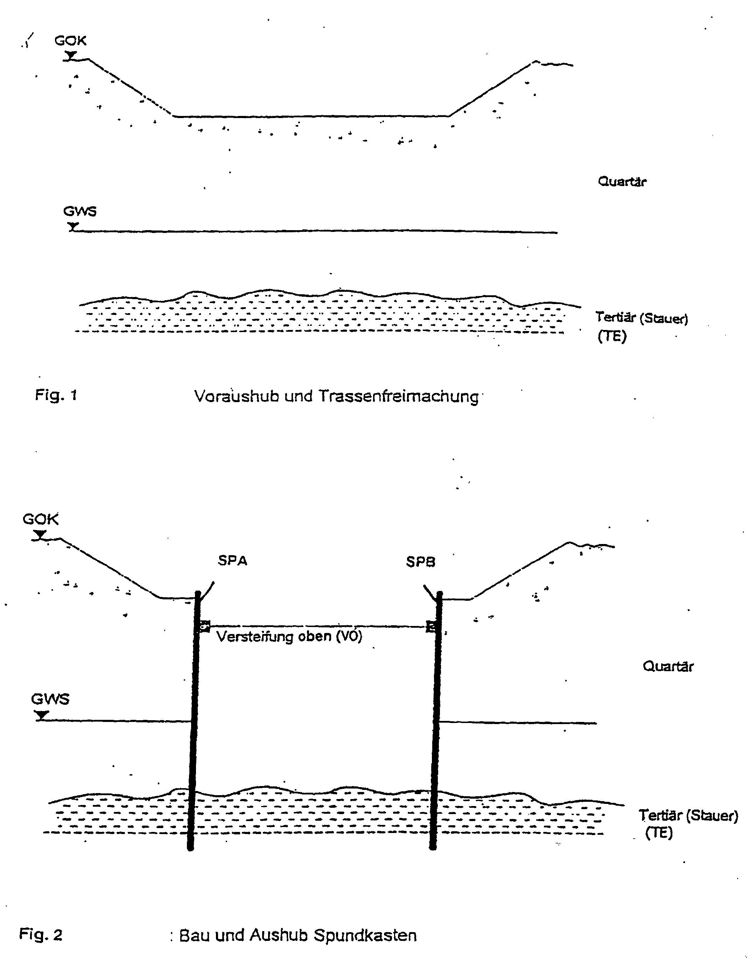

Die Figuren 1 bis 6 sind schematische Querschnittsdarstellungen, die verschiedene Phasen der Errichtung eines Durchlaßbauwerks (Gates) sowie das fertige Durchlaßbauwerk als Teil eines Funnel-and-Gate-Systems (in Verbindung mit hier nicht dargestellten Dichtwandbereichen) zeigen.

Fig. 1 zeigt einen Querschnitt durch ein Gelände mit einem tertiären Stauer (TE) (grundwasserstauende Bodenschicht), einer grundwasserführenden Schicht (Aquifer) mit dem Grundwasserspiegel (GWS) und einer quartären Schicht, in dem das Durchlaßbauwerk errichtet werden soll. Es ist schematisch der Zustand nach Ausführung eines Voraushubes auf eine ausreichende Tiefe unterhalb der Geländeoberkante (GOK) zur Entfernung von Fundamentresten o. ä. dargestellt.

Nach der Trassenfreimachung wird durch das senkrechte Niederbringen zweier zueinander paralleler Spundwände (SPA) und (SPB) sowie von die seitlichen Endflächen des Bauwerks bildenden zusätzlichen Spundwänden ein Spundkasten erzeugt. Die Ecken des Spundkastens werden durch Schlösser oder Verpressen abgedichtet. Nach dem Schließen des Spundkastens wird dieser unter Einsatz einer Wasserhaltung bis zur grundwasserstauenden Tertiäroberfläche (TE) ausgehoben und nach statischen Erfordernissen an den Umfassungsflächen mit Versteifungen (VO) versehen. Der damit erreichte Bauzustand ist in Fig. 2 skizziert.

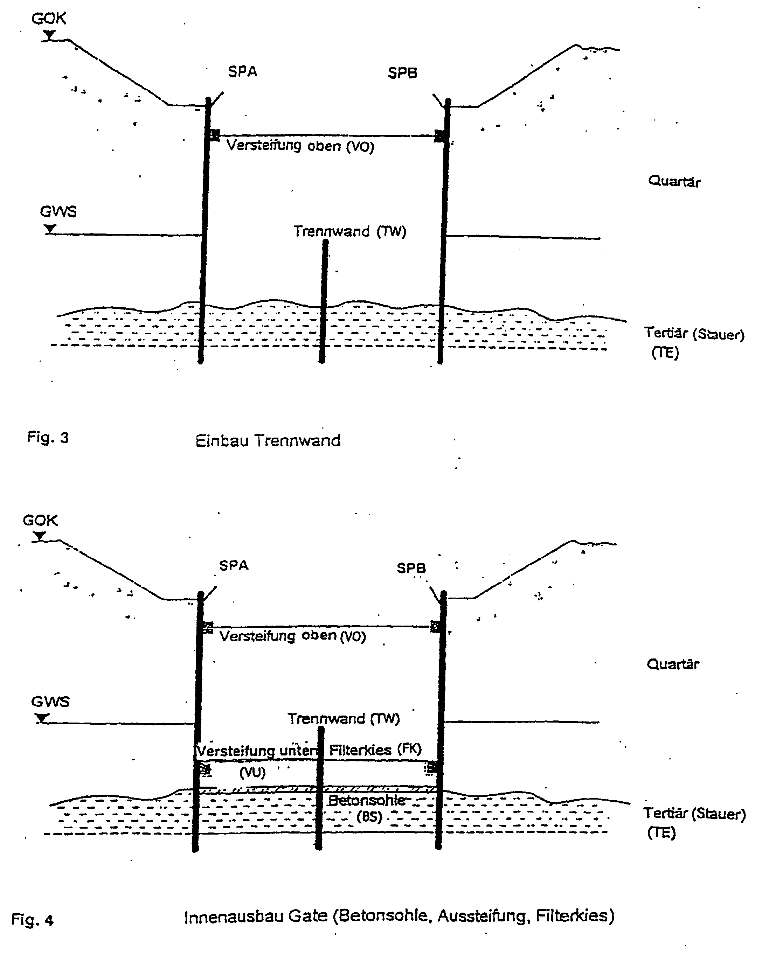

Anschließend wird annähernd mittig zwischen den äußeren Spundwänden (SPA) und (SPB) eine weitere Spundwand oder Betonwand als Trennwand (TW) niedergebracht. Der damit geschaffene Zustand ist in Fig. 3 dargestellt.

Danach wird mit dem Einbringen einer Betonsohle (BS) und dem Einbau von (hier nicht dargestellten) Trennwänden zur Abtrennung einzelner Sektionen sowie durch die Anbringung von unteren Versteifungen (VU) (die auf den Seitenwänden zur Abtrennung der Sektionen aufliegen) der Ausbau des Bauwerks fortgesetzt. Anschließend wird eine Filterkies-(FK-)schicht bis zur Höhe der unteren Versteifungen (VU) eingebracht. Dieser Zustand ist in Fig. 4 dargestellt. Zusätzlich werden in (vorher ausgemessenen) Tiefpunkten der Tertiär-(TE-)oberfläche an der Zustromseite der Trennwand (TW) (nicht dargestellte) Schwerphasensümpfe installiert, aus weichen durch (ebenfalls nicht dargestellte) Verrohrungen eventuell auf die Trennwand (TW) auftreffende Schwerphasen abgezogen werden können.

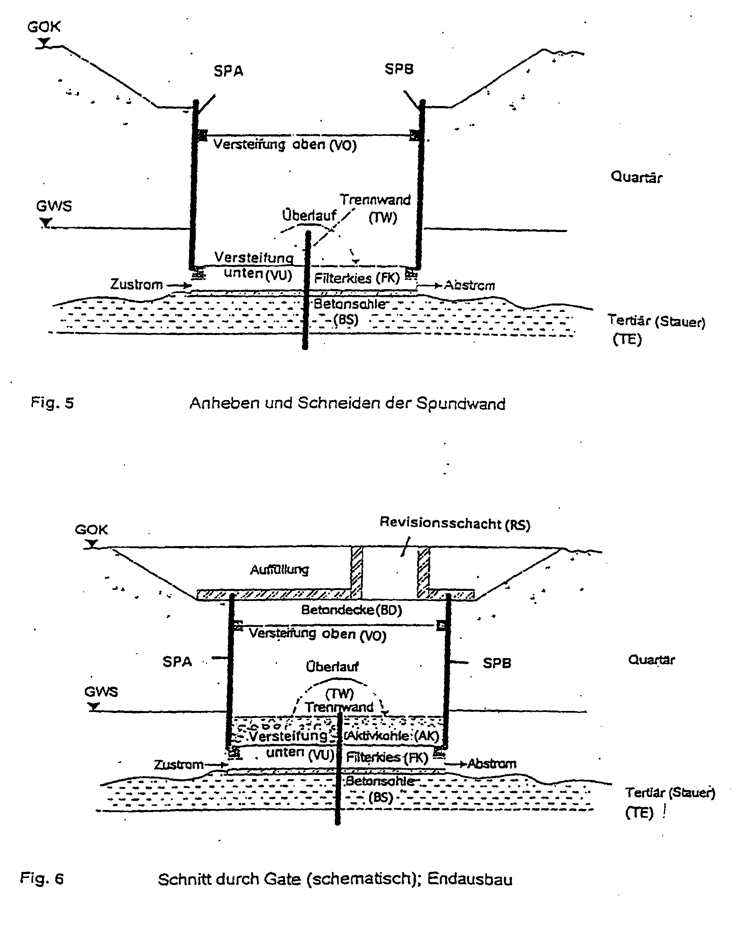

Fig. 5 zeigt die nächste Bauphase, in der durch Anheben der zu- (SPA) und abstromseitigen (SPB) Spundwand Zu- und Abstromöffnungen geschaffen wurden. Mit dem segment- bzw. bohlenweisen Anheben der Spundwände (SPA und SPB) wird zugleich das Bauwerk geflutet. Die Spundbohlen stützen sich an der oberen (VO) und unteren (VU) Versteifung, denen gegenüber sie vertikal verschieblich sind, ab. In den Bereichen der Seitenwände (Sektionswände) werden die Spundbohlen nicht angehoben und dienen damit neben den Seitenwänden als Auflager und Anker für die Versteifungen. Am oberen Ende werden die Spundbohlen nach dem Anheben auf die erforderliche Einbindetiefe für eine nachfolgend herzustellende Betondecke (BD) abgeschnitten.

Anschließend wird diese Betondecke (BD) (gleichzeitig endgültige Aussteifung) zum Verschließen des Bauwerks gebildet, wobei jeweils vorzugsweise annähernd in der Mitte der einzelnen Sektionen ein Revisionsschacht (RS) ausgeführt wird. Anschließend erfolgt die Installation von Überwachungsinstrumenten, Bewetterungsgeräten etc. und die Befüllung der einzelnen Sektionen mit einer Aktivkohle-(AK-)schicht. Am Ende wird ein (nicht dargestellter) begehbarer Gitterroststeg angebracht, und danach kann das Durchlaßbauwerk in Betrieb genommen werden. Der endgültige Zustand ist in Fig. 6 skizziert.

Die Ausführung der Erfindung ist nicht auf dieses Beispiel beschränkt, sondern ebenso in einer Vielzahl von Abwandlungen möglich, die im Rahmen fachmännischen Ermessens liegen.

Während vorstehend eine Ausführung beschrieben wurde, bei der zwischen den Wänden des Bauwerks eine Filtermaterialschicht (also eine adsorptiv wirkende Füllung) vorgesehen ist, ist in bestimmten Einsatzfällen eine andere Ausführung zweckmäßig. Bei dieser ist anstelle der adsorptiven Füllung - oder auch in Kombination mit einer solchen - eine reaktiv wirkende Füllung mit einem Wasserbehandlungsstoff vorgesehen.

Während oben ein Verfahren zur Herstellung des Bauwerkes beschrieben wurde, bei dem vor dem Anheben der ersten Wand (SPA) eine konstruktive Versteifung derselben vorzunehmen ist, kann auch eine davon abweichende Verfahrensdurchführung zweckmäßig sein, bei der der Aushubbereich zwischen der ersten (SPA) und der zweiten (TW) Wand vor dem Anheben der ersten Wand (SPA)mit einem fluidischen Material (beispielsweise Sand) verfüllt wird. Dieses Material wirkt quasi-aussteifend während der Erstellung des Bauwerks. Nachdem dieses durch eine Betondecke (BD) geschlossen wurde, wirkt diese Decke (BD) als obere Versteifung. Die fluidische Füllung kann dann - insbesondere durch Abpumpen - wieder entfernt werden. Diese Verfahrensführung hat zudem den Vorteil, daß die Betondecke (BD) ohne zusätzliche Schalung direkt auf die Verfüllung betoniert werden kann.

In Abwandlung des oben erläuterten Ausführungsbeispiels können die erste Wand (SPA) bzw. die Spundbohlen im unteren Bereich Einströmöffnungen haben, unterhalb derer sich die Wand bzw. die Bohlen in ihrer endgültigen Lage noch bis in den Grundwasserstauer (TE) fortsetzen. In einer bevorzugten Ausführung sind diese Einströmöffnungen von vornherein vorhanden. In einem ersten Arbeitsschritt werden die Spundbohlen dann so tief eingerammt, daß die Einströmöffnungen zunächst vollständig im Grundwasserstauer (TE) eingebunden sind. Hierdurch wird zunächst eine wasserdicht umschlossene Baugrube realisiert. In dieser können die Aushub- und Ausbauarbeiten auf die oben beschriebene Weise vorgenommen werden. Nach Abschluß der Ausbauarbeiten werden die erste Wand (SPA) bzw. die Spundbohlen soweit angehoben, daß sich die Einströmöffnungen in der gewünschten Position bezüglich des Grundwasserstauers (TE) befinden. Wird die Position der Einströmöffnungen auf den Spundbohlen und die Länge der Spundbohlen so gewählt, daß diese auch nach dem Anheben noch in den Grundwasserstauer (TE) einbinden, so stellt diese verbleibende Einbindung ein dauerhaftes Auflager für den Spundkasten dar, so daß ggf. eine konstruktive Aussteifung (VU) im unteren Bereich verzichtbar ist.

Grundsätzlich ist auch eine nachträgliche Erzeugung der Einströmöffnungen nach der Bildung des Spundkastens und nach dem Aushub und Innenausbau möglich.

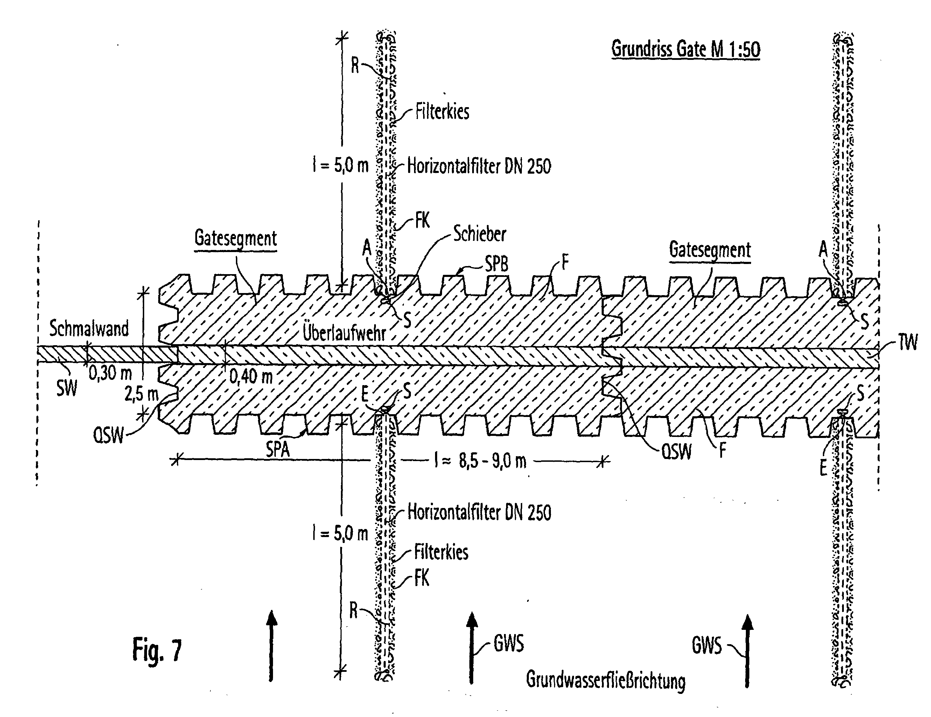

Figur 7 zeigt ein alternatives Bauwerk zur Boden- und Grundwassersanierung, insbesondere zur PAK-Reduzierung, welches ebenfalls mindestens eine erste mit "SPA" gekennzeichnete und eine zweite, mit "TW" gekennzeichnete, jeweils im wesentlichen wasserdichte, im wesentlichen vertikale und im wesentlichen quer zu einem Grundwasserstrom (GWS) in einer grundwasserführenden Bodenschicht ausgerichtete Wand sowie eine zwischen dieser ersten (SPA) und zweiten (TW) Wand angeordnete Füllung (F) mit Wasserbehandlungsmaterial, insbesondere Filtermaterialschüttung aufweist. Die erste Wand (SPA) ist vorzugsweise, wie auch in Figur 7 dargestellt, als Spundwand ausgebildet und weist wenigstens eine unterhalb des Grundwasserspiegels liegende Öffnung (E) für den Eintritt von kontaminiertem Wasser in den Bereich zwischen erster (SPA) und zweiter (TW) Wand auf, wobei die zweite, stromabwärts von der ersten Wand angeordnete Wand (TW) im wesentlichen über die gesamte Höhenerstreckung des ungestörten Grundwasserstroms verläuft und wobei ferner die zweite Wand (TW) auf einer unterhalb des Grundwasserstroms (GWS) im wesentlichen wasserundurchlässigen Schicht aufsitzt oder in diese hineinreicht, so daß die zweite Wand (TW) eine Art Überlauf darstellt, so wie dies anhand der Figuren 3-6 dargestellt und beschrieben ist. Gegenüber der vorbeschriebenen Ausführungsform unterscheidet sich also die in Figur 7 dargestellte Ausführungsform im wesentlichen nur dadurch, daß die erste Wand (SPA) zur Fluidverbindung in den Bereich zwischen erster und zweiter Wand nicht angehoben werden muß, sondern stattdessen Einlaß-Öffnungen (E) aufweist. Des weiteren weist das in Figur 7 in schematischer Draufsicht dargestellte Bauwerk eine stromabwärts der zweiten Wand (TW) angeordnete, im wesentlichen wasserdichte und im wesentlichen vertikale sowie parallel zur ersten und zweiten Wand angeordnete dritte Wand (SPB) auf, die ebenfalls vorzugsweise als Spundwand ausgebildet ist, wobei die Füllung (F) sich zwischen der ersten und dritten Wand erstreckt, d.h. sowohl zwischen der ersten (SPA) und zweiten (TW) Wand als auch zwischen der zweiten (TW) und dritten (SPB) Wand, so wie dies zum Beispiel auch bei der Ausführungsform entsprechend Figur 6 der Fall ist. Die dritte Wand (SPB) weist ebenfalls mindestens eine unterhalb des Grundwasserspiegels (GWS) liegende Öffnung (A) für den Austritt von gereinigtem Wasser auf.

Den Eintritts- und Austrittsöffnungen (E und A) sind jeweils Schieber (S) zugeordnet, mittels denen die Öffnungen (E und A) individuell und bedarfsgerecht öffen- oder verschließbar sind. Die Schieber (S) sind jeweils an den einander zugekehrten Seiten von erster (SPA) und dritter (SPB) Wand wirksam.

Des weiteren kann der Figur 7 entnommen werden, daß sowohl den Einlaßöffnungen (E) als auch den Auslaßöffnungen (A) Filter, nämlich Kiesfilter vor- bzw. nachgeschaltet sind. Die Kiesfilter umfassen Schlitz- oder Lochrohre (R), die außenseitig mit Filterkies (FK) umgeben bzw. in einem Filterkiesbett verlegt sind. Dadurch wird eine effiziente und störunanfällige Horizontaldrainage geschaffen.

Die drei Wände (SPA, TW und SPB) mit dazwischen angeordneter Filtermaterialschüttung (F) bilden ein sogenanntes "gate" als integraler Teil einer im wesentlichen wasserdichten Dichtwand, die beispielsweise als Schlitzwand, Schmalwand (SW), Bohrpfahlwand, Betonwand oder Spundwand ausgebildet sein kann.

Der Abstand zwischen der ersten Wand (SPA) und der dritten Wand (SPB) beträgt bei dem dargestellten Ausführungsbeispiel etwa zwischen 2,0 bis 3,0, insbesondere etwa 2,5 m. Die Länge der Schlitz- bzw. Lochrohre (R) samt zugeordnetem Filterkies (FK) beträgt etwa 4,0 bis 6,0, insbesondere etwa 5,0 m. Die angegebenen Dimensionen sind natürlich vorhabenspezifisch und standortabhängig.

Das beschriebene Gate ist gemäß Figur 7 auch noch für die Länge in mehrere Abteile unterteilt. Diese sind jeweils durch Querspundwände (QSW) voneinander getrennt. Endseitig sind die Gates ebenfalls durch Querspundwände (QSW) abgeschlossen. Eine Unterteilung in einzelne Abteile oder Segmente ist nicht zwingend notwendig. Auch durchgehende Konstruktionen sind gleichermaßen denkbar.

Die Vorteile der Konstruktion nach Figur 7 liegen darin, daß die Spundbohlen der ersten (SPA) und dritten (SPB) Wand nach dem Innenausbau nicht gehoben werden müssen. Die Ein- und Austrittsstellen (E und A) der Horizontaldrainagen können zur Wartungsarbeiten mittels der Schieber (S) verschlossen werden.

Die Gefahr des Einschlemmens von Bodenpartikeln in das Durchlaufbauwerk wird während des Betriebes aufgrund der vorgeschalteten Kiesfilter erheblich minimiert. Das Zuflußsystem selbst (Horizontaldrainagen) kann regeneriert werden. Insofern stellt sich die Ausführungsform gemäß Figur 7 als besonders vorteilhafte Variante dar. Die Ein- und Auslaßöffnungen (E und A) werden nach Errichtung des beschriebenen Kastens von innen her gebohrt und zunächst gegen das Eindringen von Grundwasser verschlossen. Ansonsten entspricht der Innenausbau demjenigen entsprechend den Figuren 1 bis 6.

Durch die beschriebene Horizontaldrainage mit vorgeschalteten Kiesfiltern ist es grundsätzlich auch denkbar, auf eine als Überlauf dienende Trennwand (TW) zu verzichten. Insofern werden die Maßnahmen nach den Ansprüchen 26 ff. auch als unabhängige Erfindung beansprucht.

Die oben beschriebenen Bauwerke werden insbesondere als funnel & gate-Systeme mit Leitwänden (Schmalwände SW) realisiert, können aber auch die Form einer sogenannten "permeablen Wand" haben.

## Patentansprüche

1. Bauwerk zur Boden- und Grundwassersanierung, insbesondere zur PAK-Reduzierung, welches mindestens eine erste (SPA) und zweite (TW), jeweils im wesentlichen wasserdichte, im wesentlichen vertikale und im wesentlichen quer zu einem Grundwasserstrom (GWS) in einer grundwasserführenden Bodenschicht ausgerichtete Wand sowie eine zwischen der ersten (SPA) und zweiten (TW) Wand angeordnete Füllung (F) mit Wasserbehandlungsmaterial, insbesondere Filtermaterialschüttung, aufweist,
**dadurch gekennzeichnet, daß**
die erste Wand (SPA), insbesondere ausgeführt als Spundwand, im wesentlichen oberhalb des Grundwasserstromes (GWS) und die zweite, stromabwärts von der ersten (SPA) Wand angeordnete Wand (TW) im wesentlichen über die gesamte Höhenerstreckung des ungestörten Grundwasserstromes verläuft und die zweite Wand (TW) einen mit der ersten Wand (SPA) überlappenden Höhenbereich aufweist, über den sich mindestens ein Abschnitt der Füllung erstreckt, wobei unterhalb des Grundwasserstromes eine im wesentlichen wasserundurchlässige Schicht (Tertiär (TE), Betonsohle (BS)) vorhanden ist, auf der die zweite Wand (TW) aufsitzt oder in die sie hineinreicht.

2. Bauwerk nach Anspruch 1,
**gekennzeichnet durch**
eine stromabwärts der zweiten Wand (TW) angeordnete, im wesentlichen wasserdichte, im wesentlichen vertikale und im wesentlichen parallel zur ersten (SPA) und zweiten (TW) Wand sowie im wesentlichen oberhalb des Grundwasserstromes (GWS) angeordnete dritte Wand (SPB), insbesondere Spundwand, wobei die Füllung (F) sich zwischen der ersten (SPA) und dritten (SPB) Wand erstreckt.

3. Bauwerk zur Boden- und Grundwassersanierung, insbesondere zur PAK-Reduzierung, welches mindestens eine erste (SPA) und eine zweite (TW), jeweils im wesentlichen wasserdichte, im wesentlichen vertikale und im wesentlichen quer zu einem Grundwasserstrom (GWS) in einer grundwasserführenden Bodenschicht ausgerichtete Wand sowie eine zwischen der ersten (SPA) und zweiten (TW) Wand angeordnete Füllung (F) mit Wasserbehandlungsmaterial, insbesondere Filtermaterialschüttung aufweist,
**dadurch gekennzeichnet, daß**
die erste Wand (SPA), insbesondere ausgeführt als Spundwand, mindestens eine unterhalb des Grundwasserspiegels liegende Öffnung (E) für den Eintritt von kontaminiertem Wasser in dem Bereich zwischen erster (SPA) und zweiter Wand (TW) aufweist, wobei die zweite, stromabwärts von der ersten Wand (SPA) angeordnete Wand (TW) im wesentlichen über die gesamte Höhenerstreckung des ungestörten Grundwasserstroms verläuft und wobei ferner die zweite Wand (TW) auf einer unterhalb des Grundwasserstroms im wesentlichen wasserundurchlässigen Schicht (Tertiär (TE), Betonsohle (BS), etc.) aufsitzt, oder in diese hineinreicht, so daß die zweite Wand (TW) eine Art Überlauf darstellt.

4. Bauwerk nach Anspruch 3,
**gekennzeichnet durch**
eine stromabwärts der zweiten Wand (TW) angeordnete, im wesentlichen wasserdichte, im wesentlichen vertikale und vorzugsweise im wesentlichen parallel zur ersten (SPA) und zweiten (TW) Wand angeordnete dritte Wand (SPB), insbesondere Spundwand, wobei die Füllung (F) sich zwischen der ersten und dritten Wand erstreckt und wobei die dritte Wand (SPB) ebenfalls mindestens eine unterhalb des Grundwasserspiegels liegende Öffnung (A) für den Austritt von gereinigtem Wasser aufweist.

5. Bauwerk nach Anspruch 3 oder 4,
**dadurch gekennzeichnet, daß**
den Eintritts- und Austrittsöffnungen (E, A) jeweils Schieber (S) zugeordnet sind, mittels denen die Öffnungen (E, A) individuell und bedarfsgerecht öffenoder verschließbar sind.

6. Bauwerk, insbesondere nach einem der Ansprüche 3 bis 5,
**dadurch gekennzeichnet, daß**
wenigstens den Einlaßöffnungen (E), insbesondere sowohl den Einlaß(E)- als auch Auslaß(A)-Öffnungen Filter, insbesondere Kiesfilter vor- bzw. nachgeschaltet sind.

7. Bauwerk nach Anspruch 6,
**dadurch gekennzeichnet, daß**
die Kiesfilter Schlitz- oder Lochrohre (R) umfassen, die unter Ausbildung einer Horizontaldrainage außenseitig mit Filterkies (FK) umgeben bzw. in einem Filterkiesbett verlegt sind.

8. Bauwerk nach einem der vorangehenden Ansprüche,
**dadurch gekennzeichnet, daß**
die wasserundurchlässige Schicht eine grundwasserstauende Bodenschicht, insbesondere eine Geschiebemergel- oder Felsschicht, aufweist.

9. Bauwerk nach einem der vorangehenden Ansprüche,
**dadurch gekennzeichnet, daß**
die wasserundurchlässige Schicht eine Betonsohle (BS) aufweist.

10. Bauwerk nach einem der vorangehenden Ansprüche,
**dadurch gekennzeichnet, daß**
die Filtermaterialschüttung eine Filterkies(FK-)- oder Schotterschüttung und eine auf dieser angeordnete Adsorberschüttung aufweist, wobei die Filterkies(FK)- oder Schotterschüttung insbesondere direkt auf die wasserundurchlässige Schicht aufgebracht ist und insbesondere im wesentlichen bis zur Unterkante der ersten Wand (SPA) reicht.

11. Bauwerk nach einem der vorangehenden Ansprüche,
**dadurch gekennzeichnet, daß**
die Filtermaterialschüttung sich in der Höhe im wesentlichen über die gesamte Höhe der zweiten Wand (Trennwand, TW) oberhalb der wasserundurchlässigen Schicht erstreckt.

12. Bauwerk nach einem der vorangehenden Ansprüche,
**dadurch gekennzeichnet, daß**
der als Spundwand ausgeführten ersten (SPA) und dritten (SPB) Wand Versteifungselemente zugeordnet sind, denen gegenüber Segmente der jeweiligen Spundwand vertikal verschieblich sind.

13. Bauwerk nach einem der Ansprüche 2 oder 4 bis 12,
**gekennzeichnet durch**
im wesentlichen senkrecht zur ersten (SPA) bis dritten (SPB) Wand und somit im wesentlichen parallel zum Grundwasserstrom (GWS) zwischen der ersten (SPA) und dritten (SPB) Wand verlaufende Seitenwände zur Bildung einer Bauwerkssektion.

14. Bauwerk nach einem der Ansprüche 2 oder 4 bis 13,
**gekennzeichnet durch**,
eine im wesentlichen horizontal verlaufende Decke, insbesondere Betondecke (BD), mit einem Revisionsschacht (RS).

15. Bauwerk nach einem der vorangehenden Ansprüche,
**dadurch gekennzeichnet, daß**
die Ausführung als begehbares Bauwerk, insbesondere mit einem oberhalb der Filtermaterialschicht angeordneten Gitterroststeg.

16. Bauwerk nach einem der vorangehenden Ansprüche,
**dadurch gekennzeichnet, daß**
stromaufwärts der zweiten Wand (TW), vorzugsweise im Tiefpunkt, mindestens ein Schwerphasensumpf mit Verrohrung zum Abziehen von im Grundwasserstrom enthaltenen Schwerphasen vorgesehen ist.

17. Bauwerk nach einem der vorangehenden Ansprüche,
**dadurch gekennzeichnet, daß**
die erste Wand (SPA) eine Einströmöffnung, deren Oberkante oberhalb des Grundwasserstromes angeordnet ist, und einen unteren Wandabschnitt unterhalb der Einströmöffnung aufweist, der in die wasserundurchlässige Schicht hineinreicht.

18. Bauwerk nach einem der Ansprüche 2 oder 4 bis 17,
**dadurch gekennzeichnet, daß**
der Raum zwischen erster (SPA) und dritter (SPB) Wand von oben her zugänglich ist zum Zwecke des Austausches des Wasserbehandlungsmaterials (F).

19. Bauwerk nach einem der vorangehenden Ansprüche,
**dadurch gekennzeichnet, daß**
zusätzlich zum Bauwerk selbst mindestens eine seitlich an dieses anschließende, im wesentlichen schräg oder quer zum Grundwasserstrom und im wesentlichen vertikal verlaufende, im wesentlichen wasserundurchlässige, als Funnel wirkende Dichtwand vorhanden ist.

20. Verfahren zur Errichtung eines Bauwerkes nach einem der Ansprüche 1 bis 13, mit den Schritten
(a) Niederbringen der ersten Wand (SPA) als Spundwand mit ihrer Unterkante bzw. der Oberkante ihrer Einströmöffnung bis unter die Oberkante des unteren Grundwasserstauers,
(b) Bodenaushub stromabwärts der ersten Wand (SPA),
(c) Versteifung der ersten Wand (SPA), mindestens im unteren Bereich,
(d) Niederbringen der zweiten Wand (TW) als Spundwand oder Betonwand bis unter den unteren Grundwasserhorizont,
(e) Anheben der ersten Wand (SPA) bis zu einem Niveau ihrer Unterkante bzw. Oberkante ihrer Einströmöffnung oberhalb des unteren Grundwasserstauers,
(f) Einbringen der Filtermaterialschicht.

21. Verfahren nach Anspruch 20,
**dadurch gekennzeichnet, daß**
der Schritt (e) durch einen Schritt
(e') Bohren von Einlaßöffnungen (E) in die erste Wand (SPA) und - falls eine dritte Wand (SPB) vorhanden ist - Bohren von Auslaßöffnungen (A) in die dritte Wand (SPB), jeweils von der Innenseite des Spundkastens her, und vorläufiges Verschließen der Öffnungen gegen das Eindringen von Grundwasser
ersetzt wird.

22. Verfahren nach Anspruch 20 oder 21,
**dadurch gekennzeichnet, daß**
vor dem Schritt (e) ein Schritt
(d1) Einbringen einer Betonsohle (BS)
ausgeführt wird.

23. Verfahren nach einem der Ansprüche 20 bis 22,
**dadurch gekennzeichnet, daß**
im Schritt (c) Versteifungen der ersten Wand (SPA) in deren unterem (VU) und oberem (VO) Bereich angebracht werden.

24. Verfahren nach einem der Ansprüche 20 bis 22,
**dadurch gekennzeichnet, daß**
im Schritt (c) eine Versteifung der ersten Wand nur im unteren (VU) Bereich vorgenommen und nach dem Schritt (d) ein zusätzlicher Schritt
(e0) vorübergehende Verfüllung des Raumes zwischen der ersten (SPA) und zweiten (TW) Wand mit einem fluidischen Füllstoff
ausgeführt wird, wobei der fluidische Füllstoff nach dem Schritt (e) wieder entfernt wird.

25. Verfahren nach einem der Ansprüche 20 bis 24,
**dadurch gekennzeichnet, daß**
- im Schritt (a) die erste (SPA) und dritte (SPB) Wand als Spundwand bis unter die Oberkante des unteren Grundwasserstauers sowie insbesondere zwei das Bauwerk seitlich begrenzende End-Spundwände zur Bildung eines Spundkastens niedergebracht,
- im Schritt (b) der Raum zwischen der ersten und dritten Wand, insbesondere der Innenraum des Spundkastens, unter Einsatz einer Wasserhaltung ausgehoben,
- im Schritt (c) die erste (SPA) und dritte (SPB) Wand versteift und
- im Schritt (e) die erste (SPA) und dritte (SPB) Wand bis zu einem Niveau ihrer Unterkante oberhalb des unteren Grundwasserhorizonts angehoben werden.

26. Verfahren nach einem der Ansprüche 20 bis 25,
**dadurch gekennzeichnet, daß**
der Schritt (f) in zwei Teilschritten,
(f1) Einbringen einer Filterkies(FK)- oder Schotterschicht und
(f2) Einbringen einer Adsorberschicht auf die Filterkies(FK)- oder Schotterschicht
ausgeführt wird.

27. Verfahren nach einem der Ansprüche der 20 bis 26,
**dadurch gekennzeichnet, daß**
vor dem Schritt (a) ein Schritt
(a0) Voraushub einer Trasse für das Bauwerk
ausgeführt wird.

28. Verfahren nach einem der Ansprüche 20 bis 27,
**dadurch gekennzeichnet, daß**
nach dem Schritt (e) Schritte
(e1) Abschneiden der ersten (SPA) und dritten (SPB) Wand und
(e2) Herstellen einer Betondecke (BD) auf den Oberkanten der ersten (SPA) und zweiten Wand
ausgeführt werden.

## Claims

1. A construction for soil and groundwater sanitation, in particular for PCAH reduction, comprising at least one first (SPA) and second (TW) wall in each case essentially watertight, essentially vertical and oriented essentially transversely to a ground water stream (GWS) in a groundwater-conducting soil layer, as well as a filling (F) arranged between the first (SPA) and the second (TW) wall and including a water treatment material, in particular a filter material bed,
**characterized in that**
the first wall (SPA), in particular realized as a sheet piling, extends essentially above the groundwater stream (GWS), and the second wall (TW) arranged downstream of the first wall (SPA) essentially extends over the entire height extension of the undisturbed groundwater stream, and the second wall (TW) comprises a height zone overlapping the first wall (SPA), across which height zone extends at least one portion of the filling, with an essentially impervious layer (Tertiary (TE), concrete bottom (BS)) being present below the groundwater stream, on which layer rests the second wall (TW) or into which layer extends the second wall (TW).

2. The construction according to claim 1,
**characterized by**
a third wall (SPB) arranged downstream of the second wall (TW), and essentially watertight, essentially vertical and essentially parallel to the first (SPA) and the second (TW) wall, and essentially arranged above the groundwater stream (GWS), in particular a sheet piling, with the filling (F) extending between the first (SPA) and the third (SPB) wall.

3. A construction for soil and groundwater sanitation, in particular for PCAH reduction, comprising at least one first (SPA) and second (TW) wall in each case essentially watertight, essentially vertical and oriented essentially transversely to a ground water stream (GWS) in a groundwater-conducting soil layer, as well as a filling (F) arranged between the first (SPA) and the second (TW) wall and including a water treatment material, in particular a filter material bed,
**characterized in that**
the first wall (SPA), in particular realized as a sheet piling, comprises at least one opening (E) located below the groundwater table for the entry of contaminated water in the zone between the first (SPA) and the second wall (TW), with the second wall (TW) arranged downstream of the first wall (SPA) essentially extending over the entire height extension of the undisturbed groundwater stream, and furthermore the second wall (TW) resting on an essentially impervious layer (Tertiary (TE), concrete bottom (BS), etc.) below the groundwater stream, or extending into said layer so that the second wall (TW) represents a kind of overflow.

4. The construction according to claim 3,
**characterized by**
a third wall (SPB) arranged downstream of the second wall (TW), and essentially watertight, essentially vertical and essentially parallel to the first (SPA) and the second (TW) wall, in particular a sheet piling, with the filling (F) extending between the first and the third wall, and the third wall (SPB) likewise comprising at least one opening (A) located below the groundwater table for the exit of purified water.

5. The construction according to claim 3 or 4,
**characterized in that**
the entry and exit openings (E, A) in each case have assigned gates (S) by means of which the openings (E, A) can be opened or closed individually and in a demand-responsive manner.

6. The construction according to any one of the claims 3 through 5,
**characterized in that**
filters, in particular gravel filters, are arranged upstream or downstream of at least the inlet openings (E), in particular of the inlet openings (E) as well as of the outlet openings (A).

7. The construction according to claim 6,
**characterized in that**
the gravel filters comprise slotted or perforated pipes (R) surrounded outside by filter gravel (FG) or laid in a filter gravel bed while forming a horizontal drainage.

8. The construction according to any one of the preceding claims,
**characterized in that**
the impervious layer comprises a groundwater-impounding bottom layer, in particular a boulder clay layer or a rock layer.

9. The construction according to any one of the preceding claims,
**characterized in that**
the impervious layer comprises a concrete bottom (BS).

10. The construction according to any one of the preceding claims,
**characterized in that**
the filter material bed comprises a filter gravel (FK) bed or crushed stone bed, and an adsorber bed arranged on same, with the filter gravel (FK) bed or crushed stone bed in particular being applied directly on the impervious layer, and in particular extending essentially up to the lower edge of the first wall (SPA).

11. The construction according to any one of the preceding claims,
**characterized in that**
the filter material bed extends in the height essentially over the entire height of the second wall (partition wall, TW) above the impervious layer.

12. The construction according to any one of the preceding claims,
**characterized in that**
the first (SPA) wall and the third (SPB) wall realized as a sheet piling have assigned stiffening elements relative to which segments of the respective sheet piling are vertically displaceable.

13. The construction according to any one of the claims 2 or 4 through 12,
**characterized by**
side walls extending essentially perpendicular to the first (SPA) through third (SPB) walls, and hence essentially parallel to the ground water stream (GWS) between the first (SPA) and the third (SPB) wall for forming a construction section.

14. The construction according to any one of the claims 2 or 4 through 13,
**characterized by**
an essentially horizontally extending ceiling, in particular a concrete ceiling (BD) including a manhole (RS).

15. The construction according to any one of the preceding claims,
**characterized in that**
the construction is realized as a walk-in construction, in particular having a grating footbridge arranged above the filter material layer.

16. The construction according to any one of the preceding claims,
**characterized in that**
upstream of the second wall (TW), preferably on the bottom, at least one heavy phase pit is provided including a pipework for extracting heavy phases contained in the groundwater stream.

17. The construction according to any one of the preceding claims,
**characterized in that**
the first wall (SPA) comprises an inflow opening, the upper edge of which is arranged above the groundwater stream, and a lower wall portion below the inflow opening, which extends into the impervious layer.

18. The construction according to any one of the claims 2 or 4 through 17,
**characterized in that**
the space between the first (SPA) and the third (SPB) wall is accessible from above for the purpose of replacing the water treatment material (F).

19. The construction according to any one of the preceding claims,
**characterized in that**
in addition to the construction itself, at least one essentially impervious sealing wall laterally adjacent to the construction, extending essentially obliquely or transversely to the groundwater stream and extending essentially vertically is present acting as a funnel.

20. A method of erecting the construction according to any one of the claims 1 through 13,
including the steps of
(a) driving in the first wall (SPA) as a sheet piling with its lower edge or the upper edge of its inflow opening to below the upper edge of the lower groundwater gate,
(b) excavating the soil downstream of the first wall (SPA),
(c) stiffening the first wall (SPA) at least in the lower zone,
(d) driving in the second wall (TW) as a sheet piling or a concrete wall to below the lower groundwater horizon,
(e) lifting up the first wall (SPA) to a level of its lower edge or the upper edge of its inflow opening to above the lower groundwater gate,
(f) introducing in the filter material layer.

21. The method according to claim 20,
**characterized in that**
step (e) is replaced by a step
(e') drilling inlet openings (E) into the first wall (SPA) and - in case a third wall (SPB) is provided - drilling outlet openings (A) into the third wall (SPB), in each case from the inside of the sheet pile casing, and preliminary closing of the openings against penetration of groundwater.

22. The method according to claim 20 or 21,
**characterized in that**
prior to step (e), a step
(d1) introducing a concrete bottom (BS)
is carried out.

23. The method according to any one of claims 20 through 22,
**characterized in that**
in step (c) stiffeners of the first wall (SPA) are mounted in the lower (VU) or upper (VO) zone thereof.

24. The method according to any one of claims 20 through 22,
**characterized in that**
in step (c), stiffening of the first wall is only realized in the lower (VU) zone, and after step (d), an additional step
(e0) preliminary filling of the space between the first (SPA) and the second (TW) wall with a fluidic filling material
is carried out, with the fluidic filling material being removed after step (e).

25. The method according to any one of claims 20 through 24,
**characterized in that**
- in step (a), the first (SPA) and third (SPB) wall as a sheet piling is driven in up to the upper edge of the lower groundwater gate, and two end sheet pilings, in particular laterally delimiting the construction, are driven in for forming a sheet pile casing,
- in step (b), the space between the first and the third wall, in particular the inner space of the sheet pile casing, is excavated using a drainage,
- in step (c), the first (SPA) und the third (SPB) wall are stiffened, and
- in step (e), the first (SPA) and the third (SPB) wall are lifted to a level of their lower edge to below the lower groundwater horizon.

26. The method according to any one of claims 20 through 25,
**characterized in that**
step (f) is carried out in two partial steps
(f1) introducing a filter gravel (FK) layer or crushed stone layer, and
(f2) depositing an adsorber layer on the filter gravel (FK) layer or crushed stone layer.

27. The method according to any one of claims 20 through 26,
**characterized in that**
prior to step (a), a step
(a0) pre-excavating a location for the construction
is carried out.

28. The method according to any one of claims 20 through 27,
**characterized in that**
after step (e), steps
(e1) cutting off the first (SPA) and the third (SPB) wall, and
(e2) formation of a concrete ceiling (BD) on the upper edges of the first (SPA) and the second wall
are carried out.

## Revendications

1. Ouvrage d'assainissement du sol et des eaux souterraines, en particulier pour réduire le HAP, qui présente au moins une première (SPA) et une deuxième paroi (TW) chacune étanche à l'eau pour l'essentiel, alignées, pour l'essentiel verticalement et pour l'essentiel transversalement par rapport à un écoulement des eaux souterraines (GWS) dans une couche de sol conduisant des eaux souterraines, ainsi que, disposé entre la première (SPA) et la deuxième paroi (TW), un remplissage (F) de matériau de traitement des eaux, en particulier de remblai de matériau de filtrage,
**caractérisé en ce que**
la première paroi (SPA), réalisée en particulier en tant que cloison de palplanches, s'étend pour l'essentiel au-dessus de l'écoulement des eaux souterraines (GWS) et la deuxième paroi (TW), disposée en aval de la première paroi (SPA), pour l'essentiel à travers l'étendue totale en hauteur de l'écoulement non perturbé des eaux souterraines et que la deuxième paroi (TW) présente une zone en hauteur se superposant à la première paroi (SPA), à travers laquelle au moins une section du remplissage s'étend, une couche pour l'essentiel imperméable à l'eau (tertiaire (TE), semelle de béton (BS)) figurant sous l'écoulement des eaux souterraines, sur laquelle la deuxième paroi (TW) repose ou dans laquelle elle pénètre.

2. Ouvrage selon la revendication 1,
**caractérisé par**
une troisième paroi (SPB), en particulier une cloison de palplanches, disposée en aval de la deuxième paroi (TW), pour l'essentiel étanche à l'eau, disposée pour l'essentiel verticalement et pour l'essentiel parallèlement à la première (SPA) et la deuxième paroi (TW) ainsi que, pour l'essentiel, au-dessus de l'écoulement des eaux souterraines (GWS), le remplissage (F) s'étendant entre la première (SPA) et la troisième paroi (SPB).

3. Ouvrage d'assainissement du sol et des eaux souterraines, en particulier pour réduire le HAP, qui présente au moins une première (SPA) et une deuxième paroi (TW) chacune étanche à l'eau pour l'essentiel, alignées pour l'essentiel verticalement et pour l'essentiel transversalement par rapport à un écoulement des eaux souterraines (GWS) dans une couche de sol conduisant des eaux souterraines, ainsi que, disposé entre la première (SPA) et la deuxième paroi (TW), un remplissage (F) de matériau de traitement des eaux, en particulier de remblai de matériau de filtrage,
**caractérisé en ce que**
la première paroi (SPA), réalisée en particulier en tant que cloison de palplanches, présente au moins une ouverture (E) figurant en dessous du niveau de la nappe phréatique, pour l'entrée d'eau contaminée dans la zone entre la première (SPA) et la deuxième paroi (TW), la deuxième paroi (TW), disposée en aval de la première paroi (SPA), s'étendant pour l'essentiel sur l'étendue totale en hauteur de l'écoulement non perturbé des eaux souterraines et, en outre, la deuxième paroi (TW) reposant sur ou pénétrant dans une couche pour l'essentiel imperméable à l'eau (tertiaire (TE), semelle de béton (BS), etc.), si bien que la deuxième paroi (TW) représente une sorte de trop-plein.

4. Ouvrage selon la revendication 3,
**caractérisé par**
une troisième paroi (SPB), en particulier une cloison de palplanches, disposée en aval de la deuxième paroi (TW), pour l'essentiel étanche à l'eau, pour l'essentiel verticale et, de préférence, pour l'essentiel parallèle à la première (SPA) et la deuxième paroi (TW), le remplissage (F) s'étendant entre la première (SPA) et la troisième paroi (SPB), et la troisième paroi (SPB) présentant également au moins une ouverture (A) pour la sortie d'eau purifié, figurant en dessous du niveau de la nappe phréatique.

5. Ouvrage selon la revendication 3 ou 4,
**caractérisé en ce que**
aux ouvertures d'entrée et de sortie (E, A) à chaque fois des coulisses (S) sont affectées au moyen desquelles les ouvertures (E, A) peuvent être ouvertes ou fermées individuellement et en fonction des besoins.

6. Ouvrage, en particulier selon l'une quelconque des revendications 3 à 5,
**caractérisé en ce que**
au moins aux ouvertures d'admission (E), en particulier tant aux ouvertures d'admission (E) que d'évacuation (A), sont disposés des filtres, en particulier de filtres de gravier, en amont ou en aval.

7. Ouvrage selon la revendication 6,
**caractérisé en ce que**
les filtres de gravier comprennent des tubes fendus ou percés (R) qui, en formant un drainage horizontal, sont entourés, côté extérieur, de gravier de filtrage (FK) ou déportés dans un lit de gravier de filtrage.

8. Ouvrage selon l'une quelconque des revendications précédentes,
**caractérisé en ce que**
la couche imperméable à l'eau présente une couche de sol retenant les eaux souterraines, en particulier une marne à blocaux ou une couche de roche.

9. Ouvrage selon l'une quelconque des revendications précédentes,
**caractérisé en ce que**
la couche imperméable à l'eau présente une semelle de béton (BS).

10. Ouvrage selon l'une quelconque des revendications précédentes,
**caractérisé en ce que**
le remblai de matériau de filtrage présente un remblai de gravier de filtrage (FK) ou de cailloux et un remblai adsorbeur disposé sur celui-ci, le remblai de gravier de filtrage (FK) ou de cailloux étant appliqué en particulier directement sur la couche imperméable à l'eau et s'étendant en particulier pour l'essentiel jusqu'à l'arête inférieure de la première paroi (SPA).

11. Ouvrage selon l'une quelconque des revendications précédentes,
**caractérisé en ce que**
le remblai de matériau de filtrage s'étend en hauteur, pour l'essentiel, sur la totalité de la hauteur de la deuxième paroi (paroi de séparation, TW), au-dessus de la couche imperméable à l'eau.

12. Ouvrage selon l'une quelconque des revendications précédentes,
**caractérisé en ce que**
à la première (SPA) et à la troisième paroi (SPB), réalisées en tant que cloison de palplanches, sont affectés des éléments - raidisseurs par rapport auxquels des segments de la cloison de palplanches respective peuvent coulisser verticalement.

13. Ouvrage selon l'une quelconque des revendications 2 ou 4 à 12,
**caractérisé par**
des parois latérales pour former une section d'ouvrage, s'étendant pour l'essentiel perpendiculairement à la première (SPA) jusqu'à la troisième paroi (SPB) et ainsi, pour l'essentiel, parallèlement à l'écoulement des eaux souterraines (GWS) entre la première (SPA) et la troisième paroi (SPB).

14. Ouvrage selon l'une quelconque des revendications 2 ou 4 à 13,
**caractérisé par**
une couverture s'étendant pour l'essentiel horizontalement, en particulier une couverture de béton (BD) comportant un regard (RS).

15. Ouvrage selon l'une quelconque des revendications précédentes,
**caractérisé par**
une exécution en tant qu'ouvrage praticable, en particulier comportant une passerelle de caillebotis disposée au-dessus de la couche de matériau de filtrage.

16. Ouvrage selon l'une quelconque des revendications précédentes,
**caractérisé en ce que**
en amont de la deuxième paroi (TW), de préférence au point bas, au moins un bassin de décantation de liquide en phase dense non aqueuse avec tubage pour extraire des liquides en phase dense non aqueuse contenus dans l'écoulement des eaux souterraines est prévu.

17. Ouvrage selon l'une quelconque des revendications précédentes,
**caractérisé en ce que**
la première paroi (SPA) présente une ouverture d'afflux dont - l'arête supérieure est disposée au-dessus de l'écoulement des eaux souterraines et une section de paroi inférieure en dessous de l'ouverture d'afflux qui pénètre dans la couche imperméable à l'eau.

18. Ouvrage selon l'une quelconque des revendications 2 ou 4 à 17,
**caractérisé en ce que**
l'espace entre la première (SPA) et la troisième paroi (SPB) est accessible d'en haut pour permettre l'échange du matériau de traitement des eaux (F).

19. Ouvrage selon l'une quelconque des revendications précédentes,
**caractérisé en ce que**
en plus de l'ouvrage lui-même, figure au moins une paroi étanche à l'eau agissant en tant qu'entonnoir (« Funnel »), se raccordant latéralement à celui-ci, s'étendant pour l'essentiel en biais ou transversalement à l'écoulement des eaux souterraines et pour l'essentiel verticalement, pour l'essentiel imperméable à l'eau.

20. Procédé pour créer un ouvrage selon l'une quelconque des revendications 1 à 13, comportant les étapes
(a) abaissement de la première paroi (SPA) en tant que cloison de palplanches avec son arête inférieure ou l'arête supérieure de son ouverture d'afflux jusqu'en dessous l'arête supérieure de la retenue inférieure d'eaux souterraines,
(b) creusement du sol en aval de la première paroi (SPA),
(c) raidissement de la première paroi (SPA), au moins dans la zone inférieure,
(d) abaissement de la deuxième paroi (TW) en tant que cloison de palplanches ou paroi en béton jusqu'en dessous l'horizon inférieur de nappe phréatique,
(e) élévation de la première paroi (SPA) jusqu'à un niveau de son arête inférieure ou de l'arête supérieure de son ouverture d'afflux au-dessus de la retenue inférieure des eaux souterraines,
(f) introduction de la couche de matériau de filtrage.

21. Procédé selon la revendication 20,
**caractérisé en ce que**
l'étape (e) est remplacée par une étape
(e') perçage d'ouvertures d'admission (E) dans la première paroi (SPA) et, dans le cas où une troisième paroi (SPB) existerait, perçage d'ouvertures d'évacuation (A) dans la troisième paroi (SPB), chaque fois à partir depuis le côté intérieur du caisson de palplanches, et fermeture provisoire des ouvertures contre la pénétration des eau souterraines.

22. Procédé selon la revendication 20 ou 21,
**caractérisé en ce que**
avant l'étape (e), une étape
(d1) introduction d'une semelle de béton (BS)
est exécutée.

23. Procédé selon l'une quelconque des revendications 20 à 22,
**caractérisé en ce que**
à l'étape (c), des raidisseurs sont montés à la première paroi (SPA) dans sa zone inférieure (VU) et supérieure (VO).

24. Procédé selon l'une quelconque des revendications 20 à 22,
**caractérisé en ce que**
à l'étape (c), un raidissement de la première paroi n'est entrepris que dans la zone inférieure (VU) et, qu'après l'étape (d), une étape supplémentaire
(e0) garnissage provisoire de l'espace entre la première (SPA) et la deuxième paroi (TW) avec un matériau de remplissage fluidique
est exécutée, le matériau de remplissage fluidique étant de nouveau enlevé après l'étape (e).

25. Procédé selon l'une quelconque des revendications 20 à 24,
**caractérisé en ce que**
- à l'étape (a), la première (SPA) et la troisième paroi (SPB) sont abaissées en tant que cloison de palplanches jusqu'en dessous de l'arête supérieure de la retenue inférieure des eaux souterraines ainsi que, en particulier, deux cloisons de palplanches d'extrémité délimitant latéralement l'ouvrage pour former un caisson de palplanches,
- à l'étape (b), l'espace entre la première et la troisième paroi, en particulier l'espace intérieur du caisson de palplanches est creusé en réalisant un assèchement,
- à l'étape (c), la première (SPA) et la troisième paroi (SPB) sont raidies et
- à l'étape (e), la première (SPA) et la troisième paroi (SPB) sont élevées jusqu'à un niveau de leur arête inférieure au-dessus de l'horizon inférieur de nappe phréatique.

26. Procédé selon l'une quelconque des revendications 20 à 25,
**caractérisé en ce que**
l'étape (f) est exécutée eh deux étapes partielles
(f1) introduction d'une couche de gravier de filtrage (FK) ou de cailloux et
(f2) introduction d'une couche adsorbeuse sur la couche de gravier de filtrage (FK) ou de cailloux.

27. Procédé selon l'une quelconque des revendications 20 à 26,
**caractérisé en ce que**
avant l'étape (a), une étape
(a0) pré-creusement d'un tracé pour l'ouvrage
est exécutée.

28. Procédé selon l'une quelconque des revendications 20 à 27,
**caractérisé en ce que**
après l'étape (e), les étapes
(e1) coupe de la première (SPA) et de la troisième paroi (SPB) et
(e2) réalisation d'une couverture en béton (BD) sur les arêtes supérieures de la première (SPA) et de la deuxième paroi sont exécutées.
